# EUROPÄISCHE PATENTSCHRIFT

(11) **EP 0 410 127 B1**
(45) Veröffentlichungstag und Bekanntmachung des Hinweises auf die Patenterteilung: **23.03.1994**
(21) Anmeldenummer: 90111324.1
(22) Anmeldetag: 15.06.1990
(51) Int. Cl.: H02K 1/17, H02K 15/03, H02K 23/04, G01P 3/46

(54) **Elektrische Maschine als Gleichstrom-Tachogenerator**
Electrical machine as D.C. tachometer generator
Machine électrique type générateur tachymétrique à courant continu

(30) Priorität: 27.07.1989 DE 3924842
(43) Veröffentlichungstag der Anmeldung: 30.01.1991
(73) Patentinhaber: BAUMÜLLER NÜRNBERG GMBH, D-90482 Nürnberg (DE)
(72) Erfinder: Reichel, Robert, D-8540 Schwabach (DE); Müller, Richard, D-8500 Nürnberg 30 (DE); Bauer, Wilhelm, D-8503 Altdorf (DE)
(74) Vertreter: Matschkur, Götz, Lindner Patent- und Rechtsanwälte

(56) Entgegenhaltungen:
- EP-A- 0 336 078
- EP-A- 0 355 704
- FR-A- 2 538 182
- US-A- 4 216 400
- PATENT ABSTRACTS OF JAPAN vol. 012, no. 493 (E-697) 22 Dezember 1988; & JP-A-63 206142 (SEIKO INSTR. & ELECTRONICS LTD.) 25 August 1988.

## Beschreibung

Die Erfindung betrifft ein Verfahren zur Anpassung eines Gleichstrom-Tachogenerators mit aus einer Vielzahl von Magnetelementen aufgebauten Dauermagnetpolen im Ständer an unterschiedlich gewünschte Nennspannungen sowie eine elektrische Maschine als Gleichstrom-Tachogenerator, mit eine Ankerwicklung tragendem Läufer und einem Ständer mit Dauermagneterregung, mit einem oder mehreren Dauermagnetpolen des Ständers, die jeweils aus einer Anzahl separater Magnetelemente gebildet sind.

Bekannte Gleichstrom-Tachogeneratoren bestehen in der Regel aus einem Ständer (Stator), der mit Dauermagneten und Kohlebürsten bestückt ist, sowie einem damit in Wirkungsverbindung stehenden Läufer (Rotor), in dessen Nuten eine Ankerwicklung eingelegt ist. Diese ist an einem Kollektor (Kommutator) angeschlossen, der auf dem Läufer aufgesetzt ist.

Um aus rotierenden Gleichstromtachos Ausgangsspannungen (Nennspannungen) mit standardisierten Werten (z. B. 10 Volt, 20 Volt, 40 Volt oder 60 Volt pro 1000 Läuferumdrehungen pro Minute) zu erhalten, wird die auf dem rotierenden Läufer befindliche Ankerwicklung mit entsprechend angepaßten Spulenwindungszahlen und Drahtstärken gewickelt, wie z. B. mit
25 Windungen bei einem Drahtdurchmesser von 0,265 mm
50 Windungen bei einem Drahtdurchmesser von 0,19 mm,
100 Windungen bei einem Drahtdurchmesser von 0,13 mm und
150 Windungen bei einem Drahtdurchmesser von 0,11 mm.

Selbst wenn man sich - aus Rationalisierungsgründen - z. B. auf zwei Drahtstärken beschränkt, müssen zur Erzielung der geforderten Nennspannung wenigstens vier unterschiedliche Windungszahlen beibehalten werden. Dies bedeutet in der Fertigungspraxis ein relativ häufiges Umstellen der Wickelmaschinen. Auch die unterschiedlichen Drahtstärken (z. B. 0,11 mm und 0,19 mm Durchmesser) erfordern Kollektoren mit unterschiedlichen Schlitzbreiten sowie unterschiedliche Einstellungen beim Drahtabzug und an der Schweißeinrichtung.

Zwar sind bereits elektrische Maschinen bekannt, die sich zur Bildung der Permanentmagnete mehrerer Segmente bedienen. In der US-A-4 216 400 wird eine Maschine beschrieben, deren Ständer zwei Gruppen von jeweils drei Magneten aufweist. Durch die vorgeschriebene Anordnung der Magnetsegmente soll zum einen eine genaue Positionierung der Gesamtmagnetanordnung im Ständer gewährleistet sein, zum anderen soll dadurch das sogenannte "cogging" vermieden werden. Jedoch ist es mit einer derartigen Anordnung nicht möglich, die Maschine an unterschiedliche Nennspannungen anzupassen, ohne dabei je nach gewünschter Nennspannung den Läufer mit einer Ankerwicklung unterschiedlicher Windungszahl und Drahtstärke zu versehen. Ferner ist aus FR-A-2 538 182 ein Gleichstrom-Servomotor mit einem Permanent-Magnetkommutator zu entnehmen. Dabei ist der Bereich zwischen den Permanentmagnetpolen mit Aussparungen versehen, deren Tiefe in bestimmten Verhältnissen zu anderen Abmessungsparametern der magnetischen Statorbauteile steht, um dadurch beispielsweise die Motorleistung bei hohen Drehmomenten zu verbessern oder Streuverluste im Bereich zwischen den Polen zu verringern und so eine übermäßige Funkenbildung im Bürstenbereich zu vermeiden. Zwar können auch hierbei die Permanentmagnetpole aus mehreren Segmenten zusammengesetzt sein, jedoch ist auch mit einer derartigen Anordnung eine Nennspannungsanpassung ohne Änderung der Ankerwicklungsparameter nicht möglich.

Hieraus ergibt sich ein beachtliches Bedürfnis nach einem vor allem als Gleichstrom-Tachogenerator betreibbaren, elektrischen Maschinentyp, der einerseits einfach und kostengünstig herstellbar und andererseits flexibel anwendbar und insbesondere für unterschiedliche Nennspannungen auslegbar ist. Zur Lösung dieses Problems wird ein Verfahren zur Anpassung eines Gleichstrom-Tachogenerators mit aus einer Vielzahl von Magnetelementen aufgebauten Dauermagnetpolen im Ständer an unterschiedlich gewünschte Nennpassungen durch Verändern der Anzahl der Magnetelemente je Dauermagnetpol vorgeschlagen. Weitere Merkmale des erfindungsgemäßen Verfahrens ergeben sich aus den abhängigen Ansprüchen.

Ferner wird zur Lösung des obengenannten Problems bei einer elektrischen Maschine mit den eingangs genannten Merkmalen erfindungsgemäß vorgeschlagen, die Magnetelemente nach Art eines Mosaiks anzuordnen, welches hinsichtlich seines Musters und/oder seiner Magnetelement-Stückzahl entsprechend der gewünschten in der Nennspannung der Maschine und/oder des minimalen Oberwellengehalts der Nennspannung Zusammengesetzt ist.

Aufgrund der Erfindung läßt sich durch die Art, die mosaikartige Anordnungsweise und die Anzahl der verwendeten Magnetelemente Stärke und Homogenität der Felderregung durch Dauermagneten im Ständer gezielt beeinflussen. Diese Parameter wiederum bestimmen entscheidend das Betriebs- und insbesondere Ausgangsverhalten der elektrischen Maschine, bei Gleichstrom-Tachogeneratoren vor allem deren Ausgangs- bzw. Nennspannung. Soll ein derartiger Tachogenerator bestimmten Typs für unterschiedlich gewünschte Ausgangs- bzw. Nennspannungen ausgelegt werden, so kann dies aufgrund der erfindungsgemäßen Maßnahme durch spezifische Gestaltung von Profil und Merkmalen der Permanentfelderregung im Ständer bzw. Läufer erfolgen. Mit dieser Anordnung läßt sich somit eine flexible Variation der Polflächen zur Erzielung der gewünschten Nennspannung und auch eine für minimalen Oberwellengehalt günstige Polform ausbilden. Im speziellen Anwendungsfall des Gleichstrom-Tachogenerators entfällt der fertigungsaufwendige Umstand, je nach gewünschter Nennspannung Läufer mit Ankerwicklung unterschiedlicher Windungszahlen und Drahtstärken herzustellen. Vielmehr wird mit der Erfindung der erhebliche Vorteil erzielt, daß ein einziger Standardanker für verschiedene Tachogeneratoren mit unterschiedlichen Nennspannungen eingesetzt werden kann.

Um dabei für den Anker kurze Wickelzeiten zu erzielen, ist eine kleine Spulenwindungszahl, und um niedrige Ausschußquoten zu erreichen, ein großer Drahtquerschnitt anzustreben. Infolgedessen ist die Maschine nach der Erfindung mit Vorteil mit niedriger Spulenwindungszahl, z. B. weniger als hundert, und großem Drahtquerschnitt bzw. -durchmesser, z. B. dicker als 0,14 mm, ausgebildet.

Hinzu kommt die Forderung, daß der Spannungswert im Betriebsbereich praktisch unabhängig von der Temperatur sein soll und daß Hohlwellentachos beliebig oft ohne Spannungsverlust demontierbar sein müssen. Dem trägt eine erfindungsgemäße Ausbildung dadurch Rechnung, daß als Material für die Magnetelemente Samarium-Cobalt verwendet wird. Dieses Material zeichnet sich durch eine außerordentlich hohe Remanenzinduktion, eine geradlinige bzw. lineare (Ent-) Magnetisier-Kennlinie sowie temperaturstabiles Verhalten, nämlich einen Temperaturbeiwert der Induktion von weniger als 0,015 % pro Kelvin aus.

Wegen des allerdings verhältnismäßig hohen Preisen von CoSm-Magneten müssen Gewicht, Höhe und Pol(schuh)fläche minimiert werden. Zu diesem Zweck wird - in besonders vorteilhafter Weiterbildung der Erfindung - vorgeschlagen, daß die Magnetelemente als einzelne, flache und/oder dünne Plättchen jeweils in standardisierter, vorzugsweise gleicher Form ausgeführt und auf dem Läufer zugewandte Flächen eines oder mehrerer Joche für magnetischen Rückschluß und/oder ausgeprägter Polschenkel befestigt, insbesondere aufgeklebt sind. Durch die Verwendung der dünnen Plättchenform läßt sich für die damit gebildeten Magnetpole eine kompakte Bauform, insbesondere die gewünschte räumliche Höhe, leicht herbeiführen, wobei die Plättchen zur Bildung der entsprechenden Bauform leicht handhabbar sind. Zudem können aufgrund der verwendeten Plättchen-Standardgrößen die gewünschten Permanentfeldstärken und -breiten mit ausreichender Genauigkeit und Auflösung durch gestuftes oder gestaffeltes Anbringen bzw. Ankleben der Plättchen schnell geschaffen werden. Unter diesem Gesichtspunkt ist es besonders zweckmäßig, daß die Plättchen in axialer (d. h. in Richtung der Drehachse der Maschine) und/oder tangentialer Richtung (d. h. entsprechend der Umfangsrichtung des Läufers) flach nebeneinanderliegend angeordnet sind, so daß sich mittels dieser Anordnung eine flexible Variation der Polflächen erreichen läßt, wodurch die jeweilige Nennspannung erzielt werden kann und sich ebenso eine für die Minimierung des Oberwellengehaltes günstige Polform ausbilden läßt.

Als in der praktischen Anwendung zweckmäßig haben sich länglich-rechteckig ausgeführte Magnetplättchen erwiesen, die mit ihren Längsschmalseiten gegenüber- und/oder aneinanderliegend zu ein oder mehreren Reihen angeordnet sind. Bei mehreren Reihen tangential aneinandergereihter Magnetplättchen kann eine Staffelung dann derart durchgeführt werden, daß Magnetplättchen unterschiedlicher Reihen mit ihren Stirnseiten aneinanderliegend verklebt und gegebenenfalls dabei tangential zueinander versetzt sind.

Weitere Einzelheiten, Merkmale und Vorteile der Erfindung ergeben sich aus der nachfolgenden Beschreibung eines bevorzugten Ausführungsbeispiels der Erfindung sowie anhand der Zeichnung. Dabei zeigen:
- Fig. 1: eine Draufsicht auf den Ständer eines Gleichstromtachos in dessen axialer Richtung,
- Fig. 2: eine seitliche bzw. radiale Ansicht auf den Läufer eines Gleichstromtachos,
- Fig. 3: eine entsprechende Ansicht auf den Ständer des Gleichstromtachos gemäß Fig. 1,
- Fig. 4: eine Schnittansicht gemäß der Linie IV-IV in Fig. 3, und
- Fig. 5 bis 8: Schnittansichten gemäß der Linie X-X in Fig. 4 von Ständerbohrungen in eben abgewickelter Form mit jeweils unterschiedlichen Anordnungen von Magnetelementen.

In der Zeichnung ist ein Gleichstrom-Tachogenerator dargestellt, wie er vor allem als Istwert-Geber für Regelprobleme geeignet ist. Seine Aufgabe ist die Umformung einer Antriebsdrehzahl in eine oberwellenarme, proportionale Gleichspannung, deren Polarität abhängig von der Drehrichtung ist.

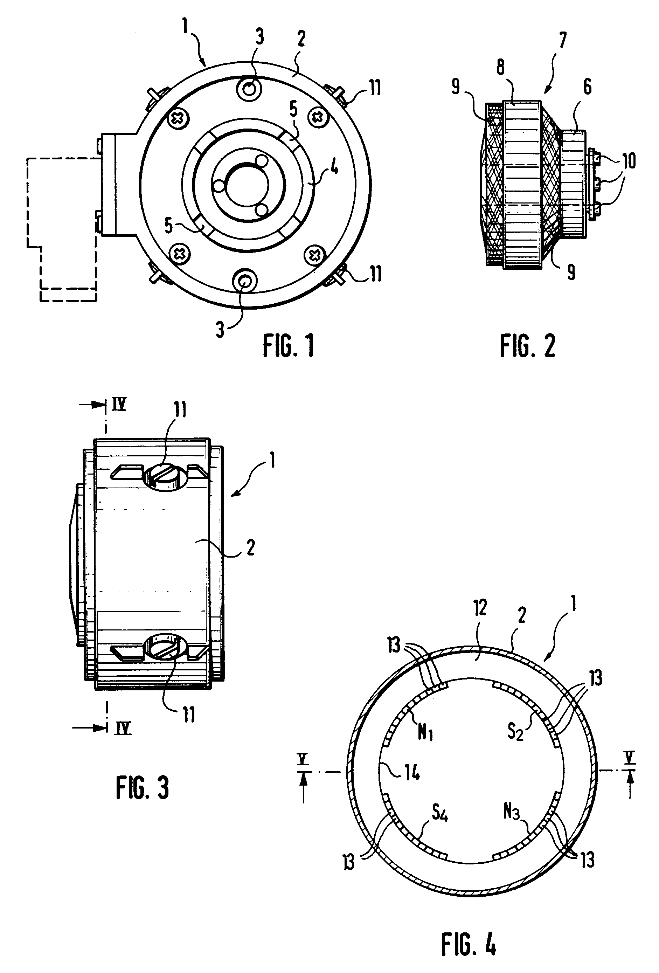

Aus der Draufsicht gemäß Fig. 1 ist der etwa hohlzylindrische Ständer 1 mit von außen baulich integriertem Gehäuse 2 ersichtlich. Das Gehäuse 2 besitzt im wesentlichen Ringform, und an seinem inneren Rand sind zwei Schraubbefestigungslöcher 3 ausgebildet, mittels welcher ein Lagerdeckel od. dgl. stirnseitig befestigt werden kann. In der Darstellung ist der Lagerdeckel nicht angebracht, so daß im Inneren des Ständers 1 ein Halterungsring 4 sichtbar ist, der von vier Aussparungen 5 für (nicht gezeichnete) Kohlebürsten durchsetzt ist. Diese dienen zur Bildung eines Gleitkontakts mit einem Kollektor 6, der - gemäß Fig. 2 - auf einen Läufer 7 aufgesteckt ist, der für das Zusammenwirken mit dem Ständer 1 ausgebildet ist. Der Läufer 7 ist hierfür an seinem Umfang mit einem Blechpaket 8 und zu dessen beiden Seiten mit einer Ankerwicklung 9 versehen. Ferner sind an der kollektorseitigen Stirnseite des Läufers 7 Spannhülsen 10 vorgesehen. Diese dienen zur Befestigung des Läufers 7 auf einen Wellenzapfen. Aus der Ansicht gemäß Fig. 3 sind zudem Feststellschrauben 11 ersichtlich, die in das Gehäuse 2 eingelassen sind und die Festklemmung der Bürsten im Inneren des Ständers 1 ermöglichen.

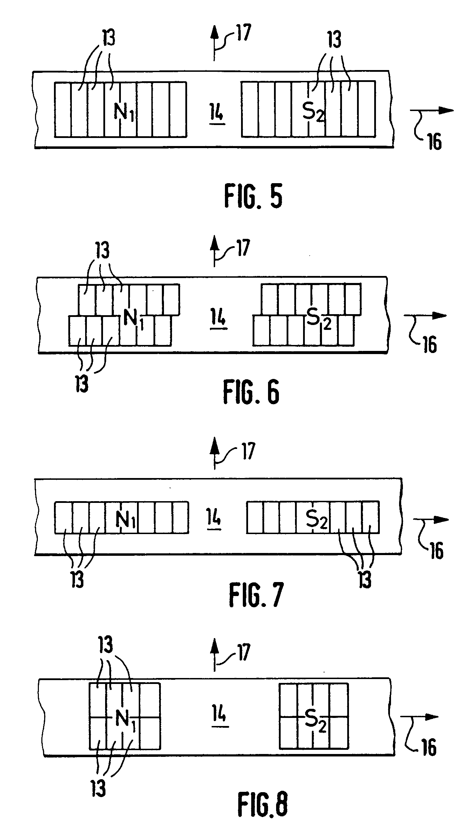

Aus der Schnittdarstellung gemäß Fig. 4 ist erkennbar, daß das Ständergehäuse 2 in seinem Inneren einen (schematisch angedeuteten) konzentrisch verlaufenden Ring 12 umgibt, der ein magnetisches Rückschlußjoch für vier Magnetpole N₁, S₂, N₃ und S₄ mit unterschiedlicher Polarität bildet. Die vier Magnetpole N₁, S₂, N₃ und S₄ befinden sich an der Innenseite des Jochrings 12 und sind jeweils durch eine Mehrzahl von Magnetelementen 13 realisiert. Die Magnetelemente 13 sind lamellenartig zu vier Gruppen zusammengesetzt, die tangential bzw. in Umfangsrichtung zueinander im Winkel von 90° versetzt liegen und den vier Magnetpolen N₁ bis S₄ entsprechen. Durch die jeweilige Anzahl der nebeneinanderliegend an die Innenwand 14 des Ringjochs 12 befestigten Magnetelemente läßt sich vor allem die Breite des den Läufer 7 durchsetzenden Magnetfelds und damit u. a. die vom Tachogenerator ausgegebene Nennspannung einstellen.

In den Figuren 5 bis 8 ist eine ebene Abwicklung etwa des halben Umfangs der die Magnetpole N₁ bis S₄ tragenden Innenfläche 14 des Ringjochs 12 dargestellt. Die darauf bevorzugt aufgeklebten Magnetelemente sind jeweils als dünne, länglich rechteckig Plättchen 13 aus beispielsweise Samarium-Cobalt ausgeführt. Gemäß Fig. 5 sind diese Magnetplättchen 13 zu in tangentialer Richtung 16 verlaufende Reihen oder Gruppen aneinandergelegt, welche jeweils die vier Magnetpole N₁ bis S₄ bilden. Analoges gilt für die Ausführung nach Fig. 7, bei welcher jedoch die Magnetplättchen 13 kürzer ausgeführt sind als in Fig. 5. Gemäß Fig. 6 und 8 sind die Magnetpole N₁, S₂, usw. jeweils durch mehrere in axialer Richtung 17 hintereinander angeordnete Reihen gebildet, wobei Magnetplättchen 13 unterschiedlicher Reihen stirnseitig aneinanderliegen. Dabei sind gemäß Fig. 6 die aneinanderliegenden Stirnseiten unterschiedlicher Magnetplättchen 13 in tangentialer Richtung 16 zueinander versetzt, während sie nach Fig. 8 mit ihren Eckkanten bündig aneinanderliegen.

Die Erfindung ist nicht auf die in den Fig. 5 bis 8 dargestellten Anordnungen von Magnetplättchen beschränkt. Es liegt im Rahmen des Erfindungsprinzips, die Magnetplättchen auch zu anderen, mosaikartigen Mustern zusammenzusetzen, um insbesondere die ausgebene Nennspannung und deren Oberwellengehalt beim Tachogenerator im gewünschten Sinn zu beeinflussen.

## Patentansprüche

1. Verfahren zur Anpassung eines Gleichstrom-Tachogenerators mit aus einer Vielzahl von Magnetelementen (13) aufgebauten Dauermagnetpolen (N1, S2, N3, S4) im Ständer (1) an unterschiedlich gewünschte Nennspannungen durch Verändern der Anzahl der Magnetelemente (13) je Dauermagnetpol (N1, S2, N3, S4).

2. Verfahren nach Anspruch 1, dadurch gekennzeichnet, daß als Material für die Magnetelemente (13) Samarium-Cobalt verwendet wird.

3. Verfahren nach einem der vorhergehenden Ansprüche, dadurch gekennzeichnet, daß die Magnetelemente (13) als dünne Plättchen (13) in standardisierter, vorzugsweise gleicher Form auf dem Läufer (7) zugewandte Flächen (14) eines oder mehrere Joche (12) oder ausgeprägter Polschenkel befestigt, insbesondere aufgeklebt werden.

4. Verfahren nach Anspruch 3, dadurch gekennzeichnet, daß die Plättchen (13) in axialer (17) und/oder tangentialer Richtung (16) der Maschine flach nebeneinanderliegend angeordnet werden.

5. Verfahren nach Anspruch 3 oder 4, dadurch gekennzeichnet, daß die Plättchen (13) nach Art eines Mosaiks angeordnet sind, welches entsprechend gewünschter Nennspannung und ggfs. minimalen Oberwellengehalts der Nennspannung zusammengesetzt ist (Fig. 5 bis 8).

6. Verfahren nach Anspruch 4 oder 5, gekennzeichnet durch mehrere Reihen in tangentialer Richtung der Maschine aneinandergereihter Magnetplättchen (13), wobei solche unterschiedlicher Reihen mit ihren Stirnschmalseiten in der tangentialen Richtung zueinander versetzt aneinanderliegen.

7. Verfahren nach einem der vorherigen Ansprüche, angewendet bei einer Maschine mit niedriger Spulenwindungszahl und großem Spulendrahtdurchmesser.

8. Verfahren nach Anspruch 7, dadurch gekennzeichnet, daß die Spulenwindungszahl kleiner als hundert und der Spulendrahtdurchmesser größer als 0,14 mm ist.

9. Elektrische Maschine als Gleichstrom-Tachogenerator, mit eine Ankerwicklung tragendem Läufer und einem Ständer mit Dauermagneterregung, mit einem oder mehreren Dauermagnetpolen (N1 - S2, N3 - S4) des Ständers (1), die jeweils aus einer Anzahl separater Magnetelemente (13) gebildet sind, dadurch gekennzeichnet, daß die Magnetelemente (13) nach Art eines Mosaiks angeordnet sind, welches hinsichtlich seines Musters und/oder seiner Magnetelement-Stückzahl entsprechend der gewünschten Nennspannung der Maschine und/oder des minimalen Oberwellengehalts der Nennspannung zusammengesetzt ist (Fig. 5 bis 8).

10. Maschine nach Anspruch 9, dadurch gekennzeichnet, daß als Material für die Magnetelemente (13) Samarium-Cobalt verwendet wird.

11. Maschine nach Anspruch 9 oder 10, dadurch gekennzeichent, daß die Magnetelemente (13) als einzelne, flache und/oder dünne Plättchen (13) jeweils in standardisierter, vorzugsweise gleicher Form ausgeführt und auf dem Läufer (7) zugewandte Flächen (14) eines oder mehrerer Joche (12) für magnetischen Rückschluß und/oder ausgeprägter Polschenkel befestigt, insbesondere aufgeklebt sind.

12. Maschine nach Anspruch 11, dadurch gekennzeichnet, daß die Plättchen (13) in axialer (17) und/oder tangentialer Richtung (16) der Maschine flach nebeneinanderliegend angeordnet sind.

13. Maschine nach Anspruch 11 oder 12, gekennzeichnet durch länglich rechteckige Magnetplättchen (13), die mit ihren Längsschmalseiten gegenüber- und/oder aneinanderliegend zu ein oder mehrere Reihen angeordnet sind (Fig. 5 bis 8).

14. Maschine nach Anspruch 13, gekennzeichnet durch mehrere Reihen in tangentialer Richtung der Maschine aneinandergereihter Magnetplättchen (13), wobei solche unterschiedlicher Reihen mit ihren Stirnschmalseiten gegebenenfalls in der tangentialen Richtung zueinander versetzt aneinanderliegen (Fig. 5 bis 8).

15. Maschine nach einem der Ansprüche 9-14, gekennzeichnet durch niedrige Spulenwindungszahl und großen Spulendrahtquerschnitt bzw. -durchmesser.

16. Maschine nach Anspruch 15, dadurch gekennzeichnet, daß die Spulenwindungszahl kleiner als hundert und der Spulendraht größer als 0,14 mm ist.

## Claims

1. Method of adapting a DC tachogenerator, with permanent magnetic poles (N1, S2, N3, S4) composed of a plurality of magnet elements (13) in the stator (1), to various desired nominal voltages by altering the number of magnet elements (13) per permanent magnetic pole (N1, S2, N3, S4).

2. Method according to claim 1, characterised in that samarium cobalt is used as a material for the magnet elements (13).

3. Method according to one of the preceding claims, characterised in that the magnet elements (13) as thin plates (13) in a standardised, preferably identical shape are fixed, in particular glued to the faces (14) of one or more yokes (12) or salient pole shanks facing the rotor (7).

4. Method according to claim 3, characterised in that the plates (13) are disposed flat next to one another in the axial (17) and/ or tangential direction (16) of the machine.

5. Method according to claim 3 or 4, characterised in that the plates (13) are arranged in the manner of a mosaic, which is composed in accordance with the desired mains voltage and if necessary the minimum harmonic content of the mains voltage.

6. Method according to claim 4 or 5, characterised by a plurality of rows of combined magnetic plates (13) arranged in the tangential direction of the machine, the narrow end faces of these different rows abutting one another in a staggered manner in the tangential direction.

7. Method according to one of the preceding claims, applied to a machine with a low number of coil windings and a large coil wire diameter.

8. Method according to claim 7, characterised in that the number of coil windings is smaller than one hundred and the coil wire diameter is larger than 0.14 mm.

9. Electrical machine as a DC tachogenerator, with a rotor carrying an armature winding and a stator with permanent magnetic excitement, having one or more permanent magnet poles (N1 - S2, N3 - S4) of the stator (1), each of which is formed of a number of separate magnet elements (13), characterised in that the magnet elements are arranged in the manner of a mosaic whose pattern and/ or number of magnet element pieces is composed in accordance with the desired mains voltage of the machine and/ or of the minimum harmonic content of the mains voltage (Figures 5 to 8).

10. Machine according to claim 9, characterised in that samarium cobalt is used as a material for the magnet elements (13).

11. Machine according to claim 9 or 10, characterised in that the magnet elements (13) are formed as separate, flat and/ or thin plates (13) each in a standardised, preferably identical shape, and are fixed, in particular glued to the faces (14) facing the rotor (7) of one or more yokes (12) for magnetic conclusion and/or of salient pole shanks.

12. Machine according to claim 11, characterised in that the plates (13) are disposed flat next to one another in the axial (17) and/ or tangential direction (16) of the machine.

13. Machine according to claim 11 or 12, characterised by elongate, rectangular magnetic plates (13), which are arranged in one or more rows with their narrow longitudinal sides lying opposite one another and/ or abutting one another (Figures 5 to 8).

14. Machine according to claim 13, characterised by a plurality of rows of magnetic plates (13) aligned in the tangential direction of the machine, the narrow end faces of these different rows optionally abutting one another in a staggered manner in the tangential direction (Figures 5 to 8).

15. Machine according to one of claims 9 - 14, characterised by a low number of coil windings and a large coil wire cross-section or diameter.

16. Machine according to claim 15, characterised in that the number of coil windings is smaller than one hundred and the coil wire is larger than 0.14 mm.

## Revendications

1. Procédé d'adaptation à différentes tensions nominales souhaitées, d'une génératrice tachymétrique à courant continu comportant, dans le stator (1), des pôles magnétiques permanents (N1, S2, N3, S4) réalisés par un grand nombre d'éléments magnétiques (13), par modification du nombre des éléments magnétiques (13) de chaque pôle magnétique permanent (N1, S2, N3, S4).

2. Procédé selon la revendication 1, caractérisé en ce que l'on utilise du samarium-cobalt en guise de matériau pour les éléments magnétiques (13).

3. Procédé selon l'une des revendications précédentes, caractérisé en ce que les éléments magnétiques (13) se présentant sous la forme de minces plaquettes (13) de forme standardisée, de préférence identique, sont fixés, et notamment collés, sur des surfaces (14) dirigées vers le rotor (7), d'une ou plusieurs culasses (12) ou de pôles saillants.

4. Procédé selon la revendication 3, caractérisé en ce que les plaquettes (13) sont disposées à plat, côte à côte dans la direction axiale (17) et/ou dans la direction tangentielle (16) de la machine.

5. Procédé selon la revendication 3 ou 4, caractérisé en ce que les plaquettes (13) sont disposées à la manière d'une mosaïque, de composition adaptée à la tension nominale souhaitée et, le cas échéant, à une teneur minimale en harmoniques de la tension nominale (figures 5 à 8).

6. Procédé selon la revendication 4 ou 5, caractérisé par plusieurs rangées, dans la direction tangentielle de la machine, de plaquettes magnétiques (13) disposées côte à côte, les plaquettes de rangées différentes étant adjacentes par leurs côtés frontaux étroits en étant décalées les unes par rapport aux autres dans la direction tangentielle.

7. Procédé selon l'une des revendications précédentes, mis en oeuvre pour une machine à faible nombre de spires de bobinage et grand diamètre de fil de bobinage.

8. Procédé selon la revendication 7, caractérisé en ce que le nombre de spires de bobinage est inférieur à cent et le diamètre de fil de bobinage supérieur à 0,14 mm.

9. Machine électrique sous forme de génératrice tachymétrique à courant continu, comportant un rotor portant un enroulement d'induit, et un stator à excitation magnétique permanente, ce stator comprenant un ou plusieurs pôles magnétiques permanents (N1 - S2, N3 - S4), qui sont formés chacun d'un certain nombre d'éléments magnétiques (13) séparés, caractérisée en ce que les éléments magnétiques (13) sont disposés à la manière d'une mosaïque de composition adaptée, quant à son motif et/ou son nombre d'éléments magnétiques, à la tension nominale souhaitée de la machine et/ou à la teneur minimale en harmoniques de la tension nominale (figures 5 à 8).

10. Machine selon la revendication 9, caractérisée en ce que l'on utilise du samarium-cobalt en guise de matériau pour les éléments magnétiques (13).

11. Machine selon la revendication 9 ou 10, caractérisée en ce que les éléments magnétiques (13) se présentant sous la forme de plaquettes individuelles (13) plates et/ou minces, réalisées selon une forme standardisée, de préférence identique, sont fixés, et notamment collés sur des surfaces (14) dirigées vers le rotor (7), d'une ou plusieurs culasses (12) pour le retour magnétique, et/ou de pôles saillants.

12. Machine selon la revendication 11, caractérisée en ce que les plaquettes (13) sont disposées à plat, côte à côte dans la direction axiale (17) et/ou dans la direction tangentielle (16) de la machine.

13. Machine selon la revendication 11 ou 12, caractérisée par des plaquettes magnétiques (13) rectangulaires et allongées, qui sont disposées en une ou plusieurs rangées, avec leurs côtés longitudinaux étroits se faisant face et/ou adjacents (figures 5 à 8).

14. Machine selon la revendication 13, caractérisée par plusieurs rangées, dans la direction tangentielle de la machine, de plaquettes magnétiques (13) disposées côte à côte, les plaquettes de rangées différentes étant adjacentes par leurs côtés frontaux étroits, le cas échéant, en étant décalées les unes par rapport aux autres dans la direction tangentielle (figures 5 à 8).

15. Machine selon l'une des revendications 9 à 14, caractérisée par un faible nombre de spires de bobinage et une grande section ou un grand diamètre de fil de bobinage.

16. Machine selon la revendication 15, caractérisée en ce que le nombre de spires de bobinage est inférieur à cent et le diamètre de fil de bobinage supérieur à 0,14 mm.
